# FASCICULE DE BREVET EUROPEEN

(11) **EP 1 767 033 B1**
(45) Date de publication et mention de la délivrance du brevet: **13.10.2010**
(21) Numéro de dépôt: 05717459.1
(22) Date de dépôt: 20.01.2005
(51) Int. Cl.: H04W 28/24

(54) **PROCEDE DE GESTION DES RESSOURCES RADIO DANS UN RESEAU D'ACCES RADIO DE TYPE UTRAN**
VERFAHREN ZUR VERWALTUNG VON FUNKBETRIEBSMITTELN IN EINEM UTRAN-FUNKZUGANGSNETZWERK
METHOD FOR MANAGING RADIO RESOURCES IN AN UTRAN RADIO ACCESS NETWORK

(30) Priorité: 28.01.2004 FR 0400807
(43) Date de publication de la demande: 28.03.2007
(73) Titulaire: FRANCE TELECOM, 75015 Paris (FR)
(72) Inventeur: BEZIOT, Nathalie, 92350 Le Plessis Robinson (FR); JIMENEZ ALDAMA, Borja, F-75015 Paris (FR)
(74) Mandataire: Joly, Jean-Jacques
(86) Numéro de dépôt international: PCT/FR2005/000130
(87) Numéro de publication internationale: WO 2005/084061

(56) Documents cités:
- WO-A-01/30103
- US-A1- 2003 099 196
- US-A1- 2003 152 097
- 3GPP: "3GPP TS 25.413 V5.5.0, 3RD GENERATION PARTNERSHIP PROJECT, TECHNICAL SPECIFICATION GROUP RADIO ACCESS NETWORK, UTRAN Iu INTERFACE RANAP SIGNALLING (RELEASE 5)" 3GPP, 3RD GENERATION PARTNERSHIP PROJECT, TECHNICAL SPECIFICATION GROUP RADIO ACCESS NETWORK, [Online] juin 2003 (2003-06), pages 1-12,19-25,32-38,93-98,194-219, XP002295807 SOPHIA ANTIPOLIS, FRANCE Extrait de l'Internet: URL:Http://www.3gpp.org/ftp/Specs/html-inf o/25413.htm> [extrait le 2004-09-09]

## Description

L'invention concerne de manière générale le domaine des télécommunications et se rapporte plus particulièrement à un procédé de gestion des ressources radio au niveau réseau d'accès dans un réseau de communication mobile en mode paquet et en mode circuit du type UMTS.

Le procédé selon l'invention est donc prévu pour s'appliquer aux réseaux mobiles utilisant la technologie UMTS, normalisée dans le cadre de la norme 3GPP. Dans un souci de ne pas surcharger la description, un glossaire comprenant la définition de l'ensemble des acronymes utilisés est prévu à la fin de la description, où le lecteur pourra utilement se reporter.

La norme UMTS spécifie un nouveau réseau d'accès mobile: l'UTRAN, qui permet d'offrir aux abonnés d'un opérateur mobile un accès à des services basés sur IP (messagerie électronique, téléchargement de fichiers, consultation de sites Web ou WAP) ou des services circuits (téléphonie, visiophonie). A l'heure actuelle, l'UMTS est phasé en différentes versions, encore appelées "releases" selon la terminologie anglo-saxonne, et notamment la version dénommée Release 99, à laquelle la description qui va suivre fait plus particulièrement référence.

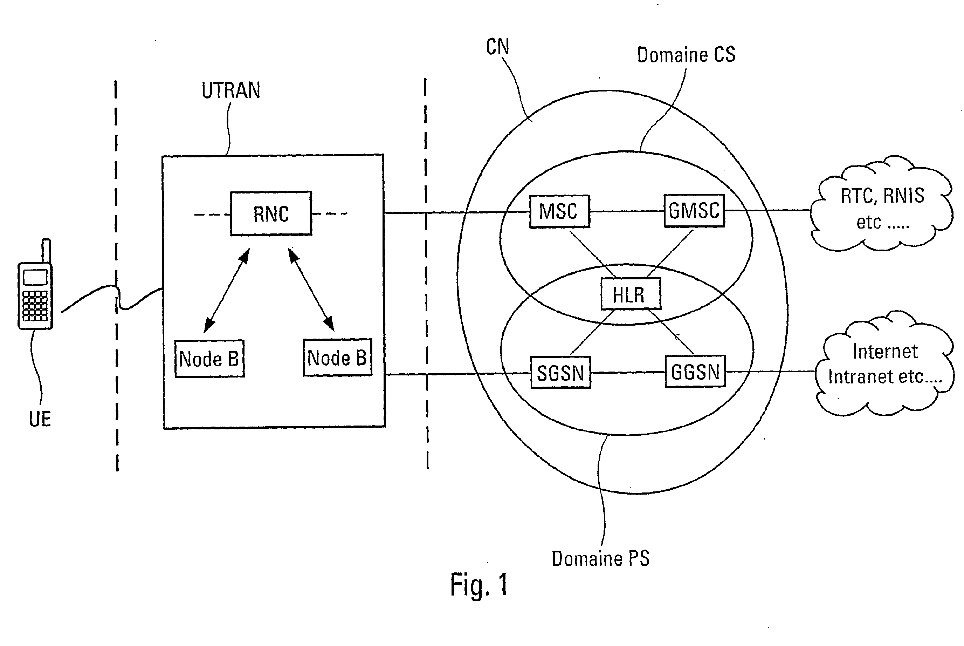

En terme d'architecture, le réseau UMTS est divisible en deux sous-réseaux, le réseau coeur CN et le réseau d'accès radio, aussi appelé UTRAN, tels que représentés à la figure 1.

Le réseau d'accès inclut une pluralité de stations de base radio Node B, prévues pour communiquer avec des équipements utilisateurs UE à travers une interface radio utilisant des ressources radio allouées par un contrôleur RNC. L'architecture hiérarchique, dans laquelle une entité contrôle plusieurs entités de niveau inférieur est identique au réseau d'accès radio du GSM. Le contrôleur de réseau radio RNC y tient la place du contrôleur de station de base (BSC) du GSM. Toutefois, les technologies radio employées pour transporter les informations sont différentes.

Le réseau coeur CN UMTS comprend quant à lui deux domaines distincts : le domaine circuit CS, qui comprend tous les services liés à la téléphonie, et le domaine paquet PS qui comprend tous les services liés à la commutation de paquets.

Au niveau du réseau coeur, on retrouve le HLR qui est une base de données commune aux deux domaines, dans laquelle sont stockées les informations relatives à chaque abonné de l'opérateur du réseau : le numéro d'appel de l'abonné, l'identité du mobile ainsi que les informations de l'abonnement. Le HLR contient également entre autres, les informations de qualité de service liées aux abonnés et aux services, qui seront définies plus loin dans la description. Ainsi, c'est à partir de cette base de données que s'effectue la gestion des abonnés mobiles au sein du réseau.

Le réseau coeur héberge également les commutateurs de circuits MSC et les commutateurs de paquets SGSN. Ces noeuds de service du réseau coeur assurent la gestion du lien de communication avec le réseau d'accès. Ils stockent le profil de l'abonné issu du HLR et effectuent un contrôle des ressources réseaux demandées par l'abonné.

Au niveau du domaine paquet, le SGSN est associé avec un autre noeud de service, le GGSN, qui joue plus particulièrement le rôle de passerelle vers les réseaux à commutation de paquets extérieurs (Internet, etc....). Le réseau coeur UMTS, en ce qui concerne le domaine paquet, est donc interconnecté avec l'extérieur via une passerelle, le noeud de service GGSN, qui contient les informations de routage permettant au mobile de communiquer avec un réseau externe, notamment le réseau Internet, tout en assurant la sécurité. Pour pouvoir envoyer les informations au mobile, le GGSN utilise alors l'autre noeud de service, le SGSN, qui gère la mobilité au niveau du réseau coeur, l'authentification et le chiffrement. Ces éléments de réseau intègrent des fonctions de routeur IP et constituent un réseau de type réseau IP.

Au niveau du domaine circuit, et de la même façon qu'expliqué en relation avec le domaine paquet, le MSC est associé avec un autre noeud de service, le GMSC, servant de passerelle vers des réseaux fixes de type RNC, RNIS, etc....

En Release 99, tous les services UMTS sont supportés par quatre classes de trafic normalisées comme suit : "Conversational", "Streaming", "Interactive" et "background".

Les classes "Conversational" et "Streaming" sont principalement prévues pour transporter des flux temps réel comme de la voix ou de la vidéo. Toutefois, pour la classe "Streaming", correspondant à une utilisation du type un utilisateur regardant (ou écoutant) un flux vidéo (ou audio) temps réel, la contrainte sur les délais de transfert de données est plus faible que pour la classe Conversational.

Les classes "Interactive" et "Background" correspondant à des services non temps réel et sont quant à elles prévues pour être utilisées dans le cadre d'applications Internet traditionnels telles que la navigation, le courrier électronique, les application FTP. Ces dernières classes étant non temps réel, elles offrent un bien meilleur taux d'erreurs grâce à des procédés de retransmission et de codage.

On a vu que l'invention concernait la gestion de la répartition des ressources, et plus particulièrement des ressources radio, dans le réseau d'accès. Une telle gestion nécessite la prise en compte des paramètres de qualité de service (QoS) associés à une demande de service.

Les paramètres de QoS du service support UMTS décrivent ainsi le service rendu par le réseau UMTS à l'utilisateur du service support. Le profil QoS, formé par l'ensemble des paramètres de QoS, spécifie ce service. Ce sont donc des paramètres normalisés permettant de définir les caractéristiques principales d'un flux de données sur le réseau, notamment en terme de débit, de type de trafic, de priorité, etc... Ces données sont stockées dans le profil de l'abonné dans le HLR et transmises, grâce à différentes procédures, aux entités suivantes: SGSN et MSC.

Le profil QoS d'un abonné dans le domaine paquet correspond en fait à la limite haute autorisée par rapport aux valeurs spécifiques demandées par l'abonné. Le profil QoS peut aussi correspondre à un profil par défaut configuré par l'opérateur.

Parmi ces paramètres de QoS qui sont spécifiés dans un profil QoS, on trouve principalement :
- "Allocation Retention Priority" (ARP) : ce paramètre de QoS permet d'effectuer une priorisation du trafic entre plusieurs abonnés pour l'allocation et la rétention des services supports UMTS. Un paramètre de ce type est spécifié respectivement pour chaque domaine : le domaine paquet et le domaine circuit.
- "Traffic Class": ce paramètre de QoS indique la priorité liée au type de service. Comme on l'a vu, en Release 99, tous les services sont supportés par quatre classes de trafic. Aussi, ce paramètre de QoS peut prendre les valeurs "Conversational" (correspondant à un niveau haute priorité, puisque l'exigence de temps réel est très importante), "Streaming", "Interactive" et "Background" (basse priorité).
- "Traffic Handling Priority" (THP): ce paramètre de QoS permet de préciser le niveau de priorité pour la classe de trafic "Interactive". Ce paramètre peut prendre trois valeurs et permet ainsi de prioriser les profils de type « interactif » les uns par rapport aux autres.

Parmi ces paramètres, on peut encore citer, à titre informatif, car non utilisés dans le cadre de la présente invention :
- "Transfert delay": ce paramètre de QoS donne le délai maximum lors du transfert d'un paquet. Il est utilisé pour les services temps réel seulement.
- "Guaranteed bit rate": ce paramètre de QoS indique le débit garanti lors du transfert d'un paquet. Il est utilisé pour les services temps réel seulement.
- "Maximum bit rate": ce paramètre de QoS indique le débit maximum.

L'ensemble des paramètres de QoS précités sont définis dans le cadre de la norme de télécommunication 3GPP. Toutefois, leur utilisation n'est pas normalisée.

En UMTS Release 99, au niveau du HLR, la norme prévoit la possibilité d'avoir un niveau de priorité dans les données d'abonné pour des services paquet et circuit. C'est le paramètre « Allocation Retention Priority » (ARP) qui est utilisé à cet effet. Ce paramètre est renseigné au niveau du HLR dans le réseau coeur pour chaque contexte PDP souscrit pour le domaine paquet ou par abonné pour le domaine circuit.

Le paramètre ARP permet donc de définir une priorité entre les abonnés pour l'allocation/conservation des ressources radio. Le paramètre ARP est utilisé dans le MSC, le SGSN, le GGSN et peut prendre trois valeurs dans le réseau coeur, respectivement : priorité 1, priorité 2 et priorité 3, la priorité 3 étant la plus faible.

Le paramètre ARP est envoyé au RNC de l'UTRAN sous forme de quatre sous-paramètres, pour associer un niveau de priorité à une communication correspondant à une demande de service d'un abonné. Ce paramètre est donc transformé en quatre sous-paramètres au niveau du réseau coeur pour être envoyé au RNC de l'UTRAN : "Priority Level", "Pre-emption Capability", "Pre-emption Vulnerability" et "Queuing allowed", dont les valeurs découlent du paramètre ARP du réseau coeur. Ces quatre sous-paramètres sont définis plus précisément dans la partie TS 25.413 de la norme 3GPP.

A partir des paramètres de priorité envoyés par le réseau coeur CN, l'UTRAN doit être capable de répartir l'intégralité de ses ressources (à savoir les ressources radio, les ressources de transport et la capacité de traitement) entre les différents utilisateurs du système.

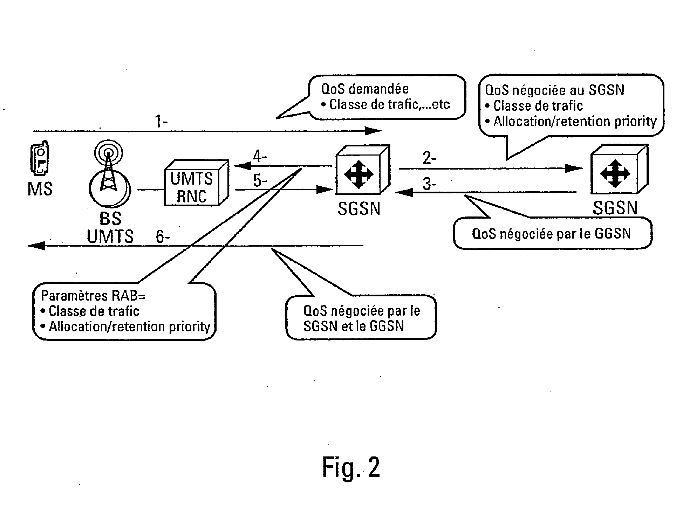

Une procédure d'activation d'un contexte PDP est décrite en référence à la figure 2. Elle permet à un terminal mobile MS de demander la mémorisation d'un contexte PDP dans le SGSN et GGSN et ainsi de réserver des ressources dans le réseau coeur pour l'exécution du service souhaité par l'abonné. Lors de l'activation d'un contexte PDP, les différents noeuds du réseau UMTS reçoivent les informations de qualité de service liées au contexte PDP demandé et à la souscription de l'abonné, en particulier la classe de trafic et la priorité de l'abonné, définie par le paramètre ARP.

L'information correspondant à la priorité de l'abonné, c'est-à-dire le paramètre ARP contenu dans les données définissant les contextes PDP souscrits par l'abonné, est transmise au SGSN lors de la mise à jour de la localisation de l'abonné. Cette information est ensuite transmise au GGSN lors de l'activation d'un contexte PDP par l'abonné, puis au RNC sous la forme des quatre sous-paramètres définis plus haut.

La procédure d'activation d'un contexte PDP a donc lieu lorsque l'abonné souhaite envoyer ou recevoir des données sur le réseau pour l'exécution d'un service auquel il a souscrit et est déclenchée à l'initiative de l'abonné mobile, permettant ainsi au terminal d'être connu du noeud de service GGSN qui réalise l'interconnexion avec le réseau externe demandé par l'abonné. A l'issue de cette procédure d'activation d'un contexte PDP, le profil de qualité de service correspondant est donc échangé entre les différents noeuds du réseau et la transmission de données entre le réseau UMTS et le réseau externe correspondant au service demandé par l'abonné peut alors débuter.

Dans une première étape, le terminal mobile MS demande l'activation d'un contexte PDP à son SGSN d'attache en précisant la QoS souhaitée. Le SGSN peut modifier la QoS demandée suivant les données de souscription et d'autres paramètres.

Dans des deuxième et troisième étape, le SGSN relaie la demande au GGSN avec les paramètres de QoS qu'il a modifiée. On parle alors de QoS négociée. Le GGSN peut alors re-modifier la QoS et la renvoie au SGSN.

Dans des étapes 4 et 5, le SGSN demande au RNC d'allouer les ressources radio nécessaires en décrivant la QoS négociée sous forme d'une requête de service support d'accès radio comprenant un ensemble de paramètres RAB, qui comprennent notamment la classe de trafic et les quatre sous-paramètres issus du paramètre ARP du réseau coeur. Les paramètres RAB sont définis dans la section 9.2.1.3 de la norme 3GPP TS 25.413 v4.0.0.

Le RNC prend en compte la demande et, à partir des paramètres RAB, effectue un calcul des ressources radio nécessaires pour le support de cette demande de service. Il vérifie si les ressources nécessaires sont disponibles et, si ce n'est pas le cas, il doit gérer la pénurie de ressources en fonction des paramètres des services déjà en cours d'appel et des paramètres de la nouvelle demande. Le RNC peut alors accepter ou refuser le service support d'accès radio demandé.

Dans une sixième étape, le SGSN accepte la demande du mobile en lui renvoyant la qualité de service qu'il a obtenue sur le réseau

Au niveau du domaine circuit, prenons l'exemple d'une demande d'appel sortant de type visiophonie. Dans une première étape, le mobile envoie sa demande de service au réseau coeur. Les caractéristiques de QoS demandée sont contenues dans le champ relatant les capacités du réseau support (Bearer Capability). Ce dernier précise le débit, le type de connexion souhaitée... Dans une deuxième étape, la demande est relayée vers le réseau fixe, type RNIS.

Enfin, le réseau coeur envoie sa demande d'allocation de ressources radio correspondante en décrivant la demande de service sous forme de paramètres RAB. Le RNC effectue un calcul des ressources nécessaires pour le support de cette demande de service. Il vérifie si ces ressources sont disponibles et, si ce n'est pas le cas, il doit gérer la pénurie de ressources en fonction des paramètres des services déjà en cours d'appel et des paramètres de la nouvelle demande. Le RNC peut alors accepter ou rejeter le RAB demandé.

Une contrainte importante à prendre en compte tient en ce que l'UTRAN doit être capable de répartir l'intégralité de ses ressources (ressources radio, ressources de transport, capacité de traitement) entre les différents utilisateurs du système à partir des paramètres de priorité envoyés par le CN. Pour cela, une procédure de préemption, prévue par la norme, peut être mise en oeuvre pour faciliter l'accès aux ressources pour des utilisateurs ou des services considérés par l'opérateur du réseau comme prioritaires lorsque les ressources ne sont pas disponibles pour répondre à la QoS requise.

Les paramètres de priorité envoyés par le CN font partie des paramètres RAB et sont les suivants :
- Traffic Class
- Traffic handling Priority
- Allocation Retention Priority, formé par les quatre sous-paramètres :
   - Priority Level
   - Pre-emption Capability
   - Pre-emption Vulnerability
   - Queuing Allowed

Ces différents paramètres peuvent permettre de définir un niveau de priorité pour l'allocation des ressources entre les différents services support d'accès radio RAB correspondant à des demandes de services venant du réseau coeur. De plus, quand les ressources nécessaires pour répondre à une nouvelle demande de service sont insuffisantes ou ne sont pas disponibles, la procédure de préemption prévue par la norme pourra être mise en oeuvre en fonction de ce niveau de priorité.

La procédure de préemption se traduit concrètement par la mise en oeuvre d'algorithmes permettant une diminution des ressources allouées à un utilisateur donné de sorte à disposer de ressources suffisantes pour répondre à une demande prioritaire.

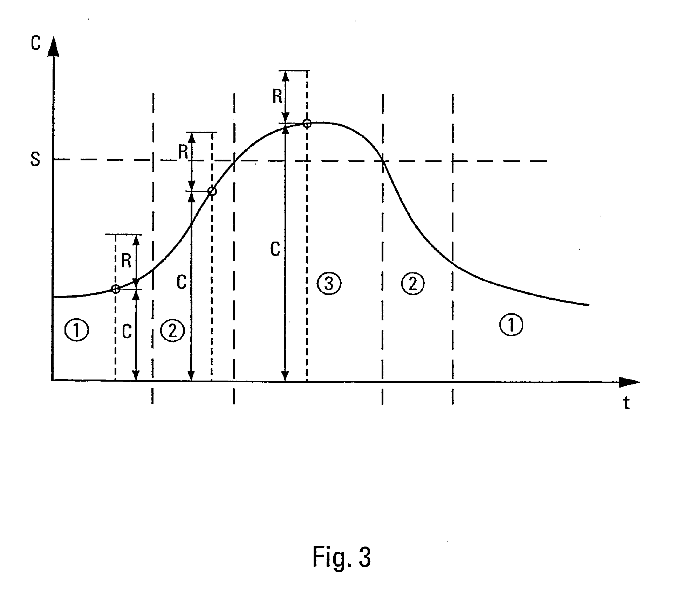

Le schéma de la figure 3 illustre à cet égard les différents niveaux d'utilisation des ressources C de l'UTRAN qui correspondent aux différents scénario de charge du réseau au cours du temps t. Ces différents scénarii permettent de définir les cas d'utilisation de la procédure de préemption. Le seuil S délimite la zone considérée comme zone de surcharge. Il est à noter que pour certains types de ressources, on ne pourra jamais dépasser ce seuil (physiquement, toutes les ressources sont utilisées, on parle alors de ressources dénombrables.) Inversement, pour d'autres types de ressources, ressources indénombrables, le seuil de surcharge S pourra être dépassé pendant une certaine période de temps.

Dans une zone 1, dite zone normale, aucune restriction n'existe quant à l'utilisation des ressources. Il y a en effet suffisamment de ressources disponibles pour répondre à une nouvelle demande d'allocation de ressources et la procédure de préemption n'a pas lieu d'être utilisée. Autrement dit, la somme des ressources C actuellement utilisées sur le réseau et des ressources nécessaires R pour satisfaire la nouvelle demande d'allocation de ressources avec la qualité de service requise, est inférieure à la valeur du seuil S qui délimite la zone de surcharge. On vérifie donc : C+R<S

Dans une zone 2, dite zone proche de la surcharge, il y a encore des ressources disponibles, mais ces ressources disponibles sont insuffisantes pour répondre à une nouvelle demande d'allocation de ressource. C'est-à-dire que le niveau d'utilisation des ressources C dans le réseau est inférieur au seuil S qui délimite la zone de surcharge, mais si l'on considère en plus dans la totalité des ressources utilisées, les ressources nécessaires R pour satisfaire la nouvelle demande d'allocation de ressources avec la qualité de service requise, on passe dans une zone référencée 3, dite zone de surcharge. Soit : C+R>S et C<S

Dans une telle situation, plusieurs stratégies peuvent être envisagées pour répondre à la nouvelle demande d'allocation de ressources sur le réseau :
- soit la demande est purement et simplement refusée,
- soit la demande est acceptée, mais avec une quantité de ressources allouée inférieure à celle demandée de sorte à ne pas rentrer dans la zone de surcharge,
- soit la demande est acceptée avec sa qualité de service demandée et la procédure de préemption est déclenchée pour récupérer les ressources nécessaires pour répondre exactement à la demande.

Dans la zone de surcharge 3, le niveau d'utilisation des ressources est égal ou supérieur au seuil qui délimite la zone de surcharge. Dans cette situation, on vérifie la relation suivante : C ≥ S

Autrement dit, dans cette zone, la charge actuelle dans le réseau, qui correspond au niveau de ressources utilisées à cet instant, est supérieure ou égale à la valeur du seuil qui délimite la zone de surcharge. Le réseau se trouve alors en surcharge ou saturation. Dans cette zone 3, toute nouvelle demande d'allocation de ressources, soit suite à l'établissement d'un nouveau RAB, soit suite à une demande de reconfiguration d'un RAB pour répondre à une évolution du trafic de ce RAB particulier déjà admis dans le réseau ou à une mobilité de ce RAB, est rejetée jusqu'à ce que le niveau de charge revienne en dessous du seuil de surcharge.

Ainsi, on s'aperçoit que dans certaines circonstances, le niveau courant d'utilisation des ressources de l'UTRAN rend problématique la réponse à une nouvelle demande d'allocation de ressources avec la qualité de service requise. Le déclenchement d'une procédure de préemption visant justement à récupérer les ressources nécessaires pour répondre à la nouvelle demande avec la qualité de service requise est alors indispensable pour faciliter l'accès aux ressources pour des utilisateurs considérés par l'opérateur comme prioritaires.

Or, les références à des procédures de préemption des ressources dans l'UTRAN présentes dans la norme 3GPP sont extrêmement succinctes et, pour l'essentiel, définissent simplement la règle suivante selon laquelle l'UTRAN peut uniquement mettre en oeuvre des mécanismes permettant de préempter des RABs avec une priorité plus faible, dans un ordre de priorité ascendant. Cependant, les critères pour affecter un niveau de priorité à un RAB par rapport à un autre RAB ne sont pas décrits dans la norme. La manière de prioriser l'accès aux ressources radio au niveau de l'UTRAN, ainsi que les différents cas d'utilisation de la procédure de préemption, sont donc laissés libres d'implémentation. Il s'agit là de notions très importantes pour les opérateurs UMTS, puisqu'elles jouent un rôle primordial en vue de définir stratégie de partage et d'allocation des ressources radio du réseau d'accès pour différentes classes d'abonnés par exemple.

Aussi, un but de la présente invention est de définir un grand nombre de niveaux différents de priorité dans l'UTRAN entre différents RABs correspondant à des demandes de service venant du CN, permettant d'optimiser la stratégie de partage et d'allocation des ressources du réseau d'accès UMTS en effectuant une priorisation des ressources radio entre les services et les abonnés au niveau du réseau d'accès radio.

Un autre but de la présente invention est de définir différents cas d'utilisation de la procédure de préemption des ressources radio au niveau du réseau d'accès UMTS utilisant la relation d'ordre de priorité qui a été établie.

La présente invention concerne donc un procédé de gestion des ressources radio dans un réseau de communication mobile de type UMTS, un noeud et un contrôleur de réseau d'accès, tels que définis respectivement dans les revendications indépendantes 1, 8 et 9.

Selon un mode de réalisation de l'invention, les paramètres de qualité de service liés au type de service utilisés pour la détermination de la valeur affectée au sous-paramètre « Priority level » définissant le niveau de priorité pour le service support correspondant, comprennent le paramètre « Traffic Class ».

Selon un autre mode de réalisation, les paramètres de qualité de service liés au type de service utilisés pour la détermination de la valeur affectée au sous-paramètre «Priority level » définissant le niveau de priorité pour le service support correspondant, comprennent en outre le paramètre « Traffic handling Priority » permettant de prioriser les services de type interactif les uns par rapport aux autres.

Selon une caractéristique, la procédure de préemption des ressources au niveau du réseau d'accès est mise en oeuvre à la réception par le contrôleur de réseau radio d'au moins une nouvelle requête de service support d'accès radio, dans le cas où il n'y a plus de ressources radio disponibles ou si les ressources radio nécessaires pour satisfaire la qualité de service associée à ladite nouvelle requête sont insuffisantes.

Selon une autre caractéristique, la procédure de préemption des ressources au niveau du réseau d'accès est mise en oeuvre à la réception par le contrôleur de réseau radio d'au moins une demande de ressources supplémentaires pour répondre à une évolution du trafic sur ledit réseau engendré par au moins un service support déjà actif au sein dudit réseau, lorsqu'il n'y a plus de ressources radio disponibles ou si les ressources radio nécessaires pour satisfaire la demande de ressources supplémentaires sont insuffisantes.

Avantageusement, dans le cas où au moins deux services supports déjà actifs au sein du réseau font l'objet respectivement d'une demande de ressources supplémentaires et où les ressources nécessaires pour satisfaire lesdites demandes sont disponibles, une étape de priorisation pour l'allocation des ressources est mise en oeuvre de sorte à déterminer, en fonction du niveau de priorité associé à chacun desdits services supports, auquel desdits services supports seront affectées prioritairement les ressources supplémentaires.

Avantageusement, dans le cas où au moins deux services supports d'accès radio déjà actifs au sein du réseau n'utilisent pas d'une façon optimale les ressources qui leur ont été allouées, une étape de priorisation est mise en oeuvre entre lesdits services supports, de sorte à diminuer les ressources allouées à ces dits services supports dans un ordre défini par le niveau de priorité associé à chacun desdits services supports.

L'invention sera mieux comprise et d'autres particularités et avantages apparaîtront à la lecture de la description d'un exemple de réalisation préféré qui va suivre, donnée uniquement à titre illustratif et non limitatif, la description faisant référence aux dessins annexés parmi lesquels :
- la figure 1 décrit l'architecture d'un réseau de type UMTS et a déjà été décrite ;
- la figure 2 décrit la procédure d'activation d'un contexte PDP pour le domaine paquet et a déjà été décrite, et
- la figure 3 illustre de façon schématique les différents niveaux d'utilisation des ressources dans l'UTRAN et a également déjà été décrite.

Ainsi, comme précédemment expliqué, l'UTRAN doit être capable de répartir l'intégralité de ses ressources entre les différents utilisateurs du système. Il est nécessaire pour cela d'implémenter au niveau du contrôleur de réseau radio de l'UTRAN une procédure de préemption visant à faciliter l'accès aux ressources pour des services supports d'accès radio ou RABs, considérés par l'opérateur du réseau comme prioritaires.

Pour ce faire, l'invention propose de définir un grand nombre de niveaux de priorité entre les différents RABs, utilisés pour prioriser l'accès aux ressources pour les RABs dans l'UTRAN, et pour pouvoir choisir quel RAB va préempter quel autre RAB pour l'allocation des ressources lorsque ces dernières sont insuffisantes ou indisponibles.

Ces différentes valeurs de niveau de priorité sont donc prévus pour être utilisés par les algorithmes de gestion des ressources et, plus particulièrement, par ceux qui feront appel à une procédure de préemption des ressources, pour déterminer l'allocation des ressources affectées à chaque RAB au niveau du réseau d'accès radio lorsque plusieurs RABs sont en compétition pour obtenir les mêmes ressources. Les valeurs de niveau de priorité selon l'invention seront utilisées par la procédure de préemption lorsque les ressources nécessaires pour satisfaire la demande d'un RAB donné ne sont pas disponibles ou bien sont insuffisantes au vue du niveau de charge courant dans le réseau d'accès. La procédure de préemption est alors prévue pour utiliser ces valeurs de niveau de priorité selon l'invention associées à chaque RAB pour déterminer si un RAB demandant a le droit de préempter des ressources au niveau du réseau d'accès et dans ce cas, quel(s) est (sont) le(s) RAB(s) qui verront ses (leurs) ressources préemptées.

Selon une caractéristique importante de l'invention, les différents niveaux de priorité associés aux différents RABs pour l'allocation des ressources radio au niveau du réseau d'accès doivent être configurables par l'opérateur en fonction des paramètres RAB envoyés au RNC par le réseau coeur et, plus particulièrement, par le noeud de service SGSN et/ou MSC du réseau coeur. Les différents paramètres RAB sont en fait issus d'une mise en correspondance avec les paramètres de qualité de service venant du réseau coeur vers le réseau d'accès.

Parmi les paramètres RAB, on trouve ainsi les paramètres suivants :
- « Traffic Class » ;
- « Traffic Handling Priority », la valeur de ces paramètres RAB étant obtenue respectivement par une mise en correspondance directe avec les paramètres de QoS correspondant « Traffic Class » et « Traffic Handling Priority » liés au type de service envoyés par le réseau coeur,
et un paramètre RAB lié à un niveau de priorité de l'abonné :
- « Allocation Retention Priority », formé par les quatre sous paramètres suivants issus du paramètre de QoS « Allocation Retention Priority » du réseau coeur :
- « Priority Level »
- « Preemption Capability»
- « Preemption Vulnerability»
- « Queuing Allowed »

L'invention prévoit en fait une nouvelle mise en correspondance des paramètres de qualité de service du réseau coeur vers le réseau d'accès, de sorte à ce que la détermination des quatre sous-paramètres RAB qui intègrent le paramètre ARP prennent en compte non seulement la valeur du paramètre ARP du réseau coeur, mais également les valeurs des paramètres de QoS liés au type de service.

Plus précisément, le niveau de priorité selon l'invention pour la gestion de l'allocation des ressources est défini pour chaque RAB par le paramètre « Priority Level » du paramètre RAB « Allocation Retention Priority », dont la valeur est déterminée en prenant en compte d'une part, la valeur du paramètre « Allocation Retention Priority » du réseau coeur et, d'autre part, la valeur d'au moins un paramètre de QoS lié au type de service. Les paramètres de QoS liés au type de service utilisés pour la détermination de la valeur affectée au sous-paramètre « Priority Level » pour la définition du niveau de priorité selon l'invention comprennent dans un premier mode de réalisation le paramètre « Traffic Class », susceptible de prendre quatre valeurs. Dans un second mode de réalisation, les paramètres de QoS liés au type de service utilisés comprennent en outre le paramètre « traffic Handling Priority », susceptible de prendre trois valeurs et qui permet de prioriser, soit d'ordonner par niveau de priorité, les services de type interactif (c'est-à-dire ceux pour lesquels le paramètre « Traffic Class » prend la valeur « Interactive »).

De cette façon, en utilisant le paramètre de QoS « Traffic Class » et le paramètre de QoS « Allocation Retention Priority » du réseau coeur, il est possible de définir jusqu'à douze valeurs pour le paramètre « Priority level » entre les différents RABs et donc, jusqu'à douze niveaux de priorité.

De plus, en utilisant le paramètre « Traffic Class », le paramètre « Allocation Retention Priority » du réseau coeur et le paramètre « Traffic Handling Priority », on peut définir jusqu'à dix-huit valeurs pour le paramètre « Priority level » entre les différents RABs et donc, jusqu'à dix-huit niveaux de priorité.

Le tableau ci-dessous illustre un premier exemple de définition à partir du paramètre « Priority Level », d'un niveau de priorité du couple service/abonné associé à chaque RAB, utilisé pour la gestion de l'allocation/conservation des ressources au sein du réseau d'accès :

| Paramètres de QoS du réseau coeur | | Paramètres RAB | | | |
|---|---|---|---|---|---|
| | | Allocation /Retention Priority | | | |
| Traffic Class | Allocation / Retention Priority | Priority Level | Pre-emption Capability | Pre-emption Vulnerability | Queuing Allowed |
| Conversational | 1 | 1 | Y | N | N |
| Conversational | 2 | 2 | Y | Y | N |
| Conversational | 3 | 3 | Y | Y | N |
| Streaming | 1 | 4 | Y | Y | N |
| Streaming | 2 | 5 | Y | Y | N |
| Streaming | 3 | 6 | Y | Y | N |
| Interactive | 1 | 7 | Y | Y | N |
| Interactive | 2 | 8 | Y | Y | N |
| Interactive | 3 | 9 | Y | Y | N |
| Background | 1 | 10 | Y | Y | N |
| Background | 2 | 11 | Y | Y | N |
| Background | 3 | 12 | N | Y | N |

La valeur Y attribuée au paramètre « Pre-emption Capability » indique que le RAB associé est susceptible de préempter les ressources d'autres RAB, la valeur N indiquant l'inverse. De la même façon, La valeur Y attribuée au paramètre « Pre-emption Vulnerability » indique que le RAB associé peut voir ses ressources préemptées par d'autres RABs, la valeur N indiquant l'inverse.

Il découle de l'exemple présenté ci-dessus, la définition suivante d'un ordre de priorité entre les différents RABs pour l'allocation/conservation des ressources à partir du paramètre « priority Level », lequel est déterminé en prenant en compte pour chaque RAB d'une part, la valeur du paramètre « Allocation Retention Priority » du réseau coeur et, d'autre part, la valeur du paramètre de QoS « Traffic Class » :
RAB avec "priority Level" = 1 > RAB avec "priority Level" = 2 >...> RAB avec "priority Level" = 11 > RAB avec "priority Level" = 12.

Ainsi, un RAB avec un niveau de priorité défini selon l'invention égal à 5 peut préempter les ressources allouées aux RABs ayant un niveau de priorité selon l'invention allant de 6 à 12.

Le tableau ci-dessous illustre un second exemple de définition à partir du paramètre « Priority Level », d'un niveau de priorité du couple service/abonné associé à chaque RAB, utilisé pour la gestion de l'allocation/conservation des ressources dans le réseau d'accès, où la valeur du paramètre « Priority Level » pour chaque RAB est cette fois déterminée en prenant en compte, en plus de la valeur du paramètre « Allocation Retention Priority » du réseau coeur et de la valeur du paramètre de QoS « Traffic Class », la valeur du paramètre de QoS lié au type de service « Traffic Handling Priority ». Cette exemple se rapporte à une configuration du réseau où les services temps réel ne peuvent pas voir leurs ressources préemptées, comme le montre la valeur N affectée au sous-paramètre «Pre-emption Vulnerability » pour les services de ce type (« Conversational » et « Streaming »).

| Paramètres de QoS du réseau coeur | | | Paramètres RAB | | | |
|---|---|---|---|---|---|---|
| | | | Allocation /Retention Priority | | | |
| Traffic Class | THP | Allocation / Retention Priority | Priority Level | Pre-emption Capability | Pre-emption Vulnerability | Queuing Allowed |
| Conversational | | 1 | 1 | Y | N | N |
| Conversational | | 2 | 2 | Y | N | N |
| Conversational | | 3 | 3 | Y | N | N |
| Streaming | | 1 | 4 | Y | N | N |
| Streaming | | 2 | 5 | Y | N | N |
| Streaming | | 3 | 6 | Y | N | N |
| Interactive | 1 | 1 | 7 | Y | Y | N |
| Interactive | 2 | 1 | 7 | Y | Y | N |
| Interactive | 3 | 1 | 7 | Y | Y | N |
| Interactive | 1 | 2 | 8 | Y | Y | N |
| Interactive | 2 | 2 | 8 | Y | Y | N |
| Interactive | 3 | 2 | 8 | Y | Y | N |
| Interactive | 1 | 3 | 9 | Y | Y | N |
| Interactive | 2 | 3 | 9 | Y | Y | N |
| Interactive | 3 | 3 | 9 | Y | Y | N |
| Background | | 1 | 10 | Y | Y | N |
| Background | | 2 | 11 | Y | Y | N |
| Background | | 3 | 12 | N | Y | N |

Les niveaux de priorité tels qu'ils viennent d'être définis seront utilisés par les algorithmes de gestion des ressources pour prioriser l'accès aux ressources lorsque plusieurs RABs sont en compétition pour obtenir les mêmes ressources et, plus particulièrement, par les algorithmes mettant en oeuvre une procédure de préemption, pour pouvoir déterminer quel RAB va préempter les ressources de quel autre RAB lorsque les ressources devant être allouées sont insuffisantes ou indisponibles.

La procédure de préemption peut notamment être utilisée à l'étape de contrôle d'admission, c'est-à-dire à la réception par le RNC d'une nouvelle requête RAB. Une nouvelle requête RAB peut découler, soit de l'établissement d'un nouveau RAB dans le réseau d'accès, soit d'une procédure de mobilité d'un RAB déjà admis dans le réseau d'accès.

Dans ce cas, en référence au schéma de la figure 3, lorsque le niveau de charge du système se trouve dans la zone 2 ou 3, c'est-à-dire qu'il existe soit des ressources disponibles mais celles-ci sont insuffisantes pour répondre à la nouvelle demande de telle manière que les exigences de QoS soient assurées, soit qu'il n'y a plus de ressources disponibles, une procédure de préemption est utilisée par les algorithmes de gestion des ressources pour récupérer les ressources nécessaires selon le niveau de priorité du RAB entrant et le niveau de priorité des RABs qui sont actifs dans le système.

La procédure de préemption est également prévue pour être utilisée pendant l'appel par le contrôle de trafic, en réponse à l'évolution du trafic d'un RAB déjà actif au sein du réseau se traduisant par une demande de ressources supplémentaires, lorsque les ressources dans le réseau pour satisfaire cette demande sont indisponibles ou sont insuffisantes. Il s'agit alors d'un contrôle individuel. La procédure de préemption permet de diminuer les ressources allouées à un RAB qui possède un niveau de priorité plus faible et à re-allouer ces ressources relâchées au RAB qui les demande et qui possède un niveau de priorité plus haut.

Dans le cas où le niveau de charge du réseau est en zone 1 et qu'il n'y a donc aucune restriction des ressources, celui-ci doit néanmoins être capable de réagir aux variations de débit d'un RAB déjà actif de telle sorte que les ressources allouées à l'utilisateur puissent s'ajuster dynamiquement aux besoins. Ainsi, au cas où deux ou plusieurs utilisateurs demandent simultanément des ressources supplémentaires, les algorithmes de gestion des ressources effectuent une priorisation de l'allocation des ressources en fonction des niveaux de priorité associés à chaque RAB, de sorte que le RAB qui possède le niveau de priorité le plus haut soit servi prioritairement.

Par contre, lorsqu'il n'y a pas de restriction de ressources dans le réseau et si deux ou plusieurs utilisateurs n'utilisent pas d'une façon optimale les ressources qui leur ont été allouées, les niveaux de priorité associés à chaque RAB concerné seront utilisés dans le cadre du contrôle de trafic, de sorte à diminuer les ressources allouées. Dans ce cas, les RABs qui possèdent un niveau de priorité plus faible verront leurs ressources réduites en premier, ensuite ceux qui ont une priorité plus haute et finalement ceux qui ont la priorité la plus haute, parmi les RABs concernés.

Egalement, dans la zone 2 et 3, d'une manière similaire à la zone 1, si plusieurs utilisateurs ne font pas un usage optimal de leurs ressources, les niveaux de priorité associés à chaque RAB concerné seront utilisés dans le cadre du contrôle de trafic, de sorte à diminuer les ressources allouées. Dans ce cas, l'ordre dans lequel la diminution des ressources allouées sera effectuée est défini par le niveau de priorité de chaque RAB concerné défini selon l'invention.

Enfin, la procédure de préemption peut également être mise en oeuvre pendant l'appel en réponse à l'évolution de la charge dans le système, dans le cadre d'un contrôle global du trafic. Notamment, lorsque le niveau de charge du réseau est en zone 3, il est nécessaire de ramener les niveaux d'utilisation des ressources à des valeurs plus stables. Dans ce cas, la procédure de préemption mise en oeuvre dans le cadre du contrôle de trafic vise à réduire les niveaux de charge dans le système. Pour ce faire, la procédure de préemption établit un ordre parmi les RABs actifs dont les ressources allouées sont susceptibles d'être diminuées, en utilisant les niveaux de priorité associés à chacun de ces RABs. Ceux qui ont la priorité la plus faible verront leurs ressources diminuer en premier lieu, suivis de ceux qui sont plus prioritaires pour enfin conclure, si la charge dans le réseau n'est pas revenu à un niveau acceptable, par ceux qui ont le niveau de priorité le plus élevé.

### GLOSSAIRE

Ce glossaire présente la liste des acronymes anglo-saxons utilisés dans la présente demande de brevet. Ces acronymes sont définis dans le cadre de la norme de télécommunication 3GPP.
- 3GPP: Third-Generation Partnership project (of ETSI)
- ETSI: European Telecommunications Standards Institute
- GSM: Global System for Mobile Communication
- UMTS: Universal Mobile Telecommunication System
- IP: Internet protocol
- BTS: Base Transceiver Station
- BSC: Base Station Controller
- HLR: Home Location Register
- SGSN: Serving GPRS Support Node
- GGSN: Gateway GPRS Support Node
- UTRAN: UMTS Terrestrial Radio Access Network
- RNC: Radio Network Controller
- QoS: Quality of Service
- ARP: Allocation Retention Priority
- PDP: Packet Data Protocol
- THP: Traffic Handling Priority
- IMSI: International Mobile Subsciber Identity
- RAB: Radio Access Bearer

## Revendications

1. Procédé de gestion de ressources radio dans un réseau de communications mobiles de type UMTS comprenant un réseau coeur (CN) et un réseau d'accès radio (UTRAN) pour supporter une pluralité de demandes de services envoyées par des équipements utilisateurs au réseau coeur, chaque service étant spécifié par des paramètres du réseau coeur décrivant une qualité de service requise pour ledit service demandé, ledit procédé comprenant, pour chaque demande de service, une étape de mise en correspondance desdits paramètres de qualité de service du réseau coeur avec des paramètres de qualité de service du réseau d'accès radio appelés paramètres RAB et une étape d'envoi au réseau d'accès radio par le réseau coeur d'une requête de service support d'accès radio comprenant lesdits paramètres RAB, **caractérisé en ce que,** un niveau de priorité étant défini pour un service support d'accès radio par un sous-paramètre "priority level" du paramètre RAB « Allocation Retention Priority », ladite étape de mise en correspondance consiste à déterminer une valeur dudit sous-paramètre "priority level" à partir d'une valeur du paramètre de qualité de service « Allocation Retention Priority » du réseau coeur et d'une valeur d'au moins un paramètre de qualité de service lié au type de service.

2. Procédé selon la revendication 1, **caractérisé en ce que** ledit au moins un paramètre de qualité de service lié au type de service comprend le paramètre "Traffic Class".

3. Procédé selon la revendication 2, **caractérisé en ce que** ledit au moins un paramètre de qualité de service lié au type de service comprend en outre le paramètre "Traffic handling priority" permettant de prioriser des services de type interactif les uns par rapport aux autres.

4. Procédé selon l'une quelconque des revendications précédentes, **caractérisé en ce qu'**il comprend une étape de préemption des ressources radio allouées au niveau du réseau d'accès radio (UTRAN) aux dits services supports d'accès radio selon leur niveau de priorité, ladite étape de préemption de ressources étant mise en oeuvre à la réception d'au moins une nouvelle requête de support d'accès radio par le réseau d'accès, dans le cas où il n'y a plus de ressources radio disponibles ou si les ressources radio nécessaires pour satisfaire la qualité de service requise par le service demandé sont insuffisantes.

5. Procédé selon l'une quelconque des revendications précédentes, **caractérisé en ce qu'**il comprend une étape de préemption des ressources radio allouées au niveau du réseau d'accès radio (UTRAN) aux dits services supports d'accès radio selon leur niveau de priorité, ladite étape de préemption de ressources étant mise en oeuvre à la réception d'au moins une demande de ressources supplémentaires pour répondre à une évolution du trafic sur ledit réseau, dans le cas où il n'y a plus de ressources radio disponibles ou si les ressources radio nécessaires pour satisfaire la qualité de service requise par le service demandé sont insuffisantes.

6. Procédé selon l'une quelconque des revendications précédentes, **caractérisé en ce que,** dans le cas où au moins deux services support d'accès radio déjà actifs au sein du réseau font l'objet respectivement d'une demande de ressources supplémentaires et où les ressources nécessaires pour satisfaire lesdites demandes sont disponibles, ledit procédé comprend une étape de priorisation pour l'allocation de ressources destinée à déterminer, en fonction du niveau de priorité associé à chacun des services supports, auquel desdits services supports seront affectées prioritairement les ressources supplémentaires.

7. Procédé selon l'une quelconque des revendications précédentes, **caractérisé en ce que,** dans le cas où au moins deux services support d'accès radio déjà actifs au sein du réseau n'utilisent pas de façon optimale les ressources qui lui ont été allouées, ladite étape de priorisation est destinée à diminuer les ressources allouées à ces services supports, dans un ordre défini par le niveau de priorité associé à chacun desdits services supports.

8. Noeud de service de réseau coeur (SGSN, MSC) d'un réseau de communications mobiles de type UMTS comprenant un réseau coeur (CN) et un réseau d'accès radio (UTRAN), apte à recevoir une pluralité de demandes de services envoyées par des équipements utilisateurs au réseau coeur, chaque service étant spécifié par des paramètres du réseau coeur décrivant une qualité de service requise pour ledit service demandé, ledit noeud de service comprenant des moyens pour mettre en correspondance lesdits paramètres de qualité de service du réseau coeur avec des paramètres de qualité de service du réseau d'accès radio appelés paramètres RAB et des moyens d'envoi au réseau d'accès d'une requête de service support d'accès radio pour chaque demande de service comprenant lesdits paramètres RAB, **caractérisé en ce que,** un niveau de priorité étant défini pour un service support par un sous-paramètre "priority level" du paramètre RAB « Allocation Retention Priority », lesdits moyens de mise en correspondance sont aptes à déterminer une valeur dudit sous-paramètre "priority level" à partir d'une valeur du paramètre de qualité de service « Allocation Retention Priority » du réseau coeur et d'une valeur d'au moins un paramètre de qualité de service lié au type de service.

9. Contrôleur de réseau d'accès radio (RNC) d'un réseau de communications mobiles de type UMTS comprenant un réseau coeur (CN) et un réseau d'accès radio (UTRAN), apte à recevoir une pluralité de requêtes de service support d'accès radio envoyées par le réseau coeur en réponse à une pluralité de demandes de services envoyées par des équipements utilisateurs au réseau coeur, chaque requête de service support d'accès radio comprenant des paramètres RAB issus d'une mise en correspondance avec des paramètres de qualité de service du réseau coeur décrivant la qualité de service requise pour chaque demande de service, ledit contrôleur comprenant des moyens de préemption de ressources radio allouées aux services supports radio en fonction d'un niveau de priorité associé à chacun desdits services supports, **caractérisé en ce que** ledit niveau de priorité d'un service support est défini par un sous-paramètre "priority level" du paramètre RAB « Allocation Retention Priority » dont la valeur est déterminée à partir d'une valeur du paramètre de qualité de service « Allocation Retention Priority » du réseau coeur et d'une valeur d'au moins un paramètre de qualité de service lié au type de service.

10. Contrôleur de réseau d'accès radio (RNC) selon la revendication 9, **caractérisé en ce que** les moyens de préemption de ressources sont mis en oeuvre à la réception d'au moins une nouvelle requête de support d'accès radio, dans le cas où il n'y a plus de ressources radio disponibles ou si les ressources radio nécessaires pour satisfaire la qualité de service requise par le service demandé sont insuffisantes,

11. Contrôleur de réseau d'accès radio (RNC) selon l'une des revendications 9 et 10, **caractérisé en ce que** les moyens de préemption de ressources sont mis en oeuvre à la réception d'au moins une demande de ressources supplémentaires pour répondre à une évolution du trafic sur ledit réseau, dans le cas où il n'y a plus de ressources radio disponibles ou si les ressources radio nécessaires pour satisfaire la qualité de service requise par le service demandé sont insuffisantes.

12. Contrôleur de réseau d'accès radio (RNC) selon l'une des revendications 9 à 11, **caractérisé en ce qu'**il comprend, dans le cas où au moins deux services support d'accès radio déjà actifs au sein du réseau font l'objet respectivement d'une demande de ressources supplémentaires et où les ressources nécessaires pour satisfaire lesdites demandes sont disponibles, des moyens de priorisation pour l'allocation de ressources aptes à déterminer, en fonction du niveau de priorité associé à chacun des services supports, auquel desdits services supports seront affectées prioritairement les ressources supplémentaires.

13. Contrôleur de réseau d'accès radio (RNC) selon l'une des revendications 9 à 12, **caractérisé en ce qu'**il comprend, dans le cas où au moins deux services support d'accès radio déjà actifs au sein du réseau n'utilisent pas de façon optimale les ressources qui leur ont été allouées, des moyens de diminution des ressources allouées à ces services supports, dans un ordre défini par le niveau de priorité associé à chacun desdits services supports.

## Claims

1. Method for managing radio resources in a UMTS-type mobile communications network comprising a core network (CN) and a radio access network (UTRAN) for supporting a plurality of service requests sent by user equipments to the core network, each service being specified by parameters of the core network describing a quality of service required for the said requested service, the said method comprising, for each service request, a step of mapping the said quality of service parameters of the core network with quality of service parameters, called RAB parameters, of the radio access network and a step of sending to the radio access network by the core network a radio access support service request comprising the said RAB parameters, **characterized in that,** a priority level being defined for a radio access support service by a "priority level" sub-parameter of the "Allocation Retention Priority" RAB parameter, the said mapping step consists in determining a value of the said "priority level" sub-parameter on the basis of a value of the "Allocation Retention Priority" quality of service parameter of the core network and of a value of at least one quality of service parameter related to the type of service.

2. Method according to Claim 1, **characterized in that** the said at least one quality of service parameter related to the type of service comprises the "Traffic Class" parameter.

3. Method according to Claim 2, **characterized in that** the said at least one quality of service parameter related to the type of service further comprises the "Traffic handling priority" parameter making it possible to prioritize services of interactive type with respect to one another.

4. Method according to any one of the preceding claims, **characterized in that** it comprises a step of pre-empting radio resources allocated at the radio access network (UTRAN) level to the said radio access support services according to their priority level, the said step of pre-empting resources being implemented on receipt of at least one new radio access support request by the access network, in the case where there are no more radio resources available or if the radio resources necessary in order to satisfy the quality of service required by the requested service are insufficient.

5. Method according to any one of the preceding claims, **characterized in that** it comprises a step of pre-empting radio resources allocated at the radio access network (UTRAN) level to the said radio access support services according to their priority level, the said step of pre-empting resources being implemented on receipt of at least one request for additional resources in order to respond to a change in the traffic on the said network, in the case where there are no more radio resources available or if the radio resources necessary in order to satisfy the quality of service required by the requested service are insufficient.

6. Method according to any one of the preceding claims, **characterized in that,** in the case where at least two radio access support services already active within the network are the subject, respectively, of a request for additional resources and where the resources necessary in order to satisfy the said requests are available, the said method comprises a prioritization step for the allocation of resources, which step is intended to determine, as a function of the priority level associated with each of the support services, to which of the said support services the additional resources will be assigned by priority.

7. Method according to any one of the preceding claims, **characterized in that,** in the case where at least two radio access support services already active within the network do not make optimal use of the resources that have been allocated to them, the said prioritization step is intended to reduce the resources allocated to these support services, in an order defined by the priority level associated with each of the said support services.

8. Core network service node (SGSN, MSC) of a UMTS-type mobile communications network comprising a core network (CN) and a radio access network (UTRAN), capable of receiving a plurality of service requests sent by user equipments to the core network, each service being specified by parameters of the core network describing a quality of service required for the said requested service, the said service node comprising means for mapping the said quality of service parameters of the core network with quality of service parameters, called RAB parameters, of the radio access network and means for sending to the access network a radio access support service request for each service request comprising the said RAB parameters, **characterized in that,** a priority level being defined for a support service by a "priority level" sub-parameter of the "Allocation Retention Priority" RAB parameter, the said mapping means are capable of determining a value of the said "priority level" sub-parameter on the basis of a value of the "Allocation Retention Priority" quality of service parameter of the core network and of a value of at least one quality of service parameter related to the type of service.

9. Radio access network controller (RNC) of a UMTS-type mobile communications network comprising a core network (CN) and a radio access network (UTRAN), capable of receiving a plurality of radio access support service requests sent by the core network in response to a plurality of service requests sent by user equipments to the core network, each radio access support service request comprising RAB parameters arising from a mapping with quality of service parameters of the core network describing the quality of service required for each service request, the said controller comprising means for pre-empting radio resources allocated to the radio support services as a function of a priority level associated with each of the said support services, **characterized in that** the said priority level of a support service is defined by a "priority level" sub-parameter of the "Allocation Retention Priority" RAB parameter whose value is determined on the basis of a value of the "Allocation Retention Priority" quality of service parameter of the core network and of a value of at least one quality of service parameter related to the type of service.

10. Radio access network controller (RNC) according to Claim 9, **characterized in that** the means for pre-empting resources are implemented on receipt of at least one new radio access support request, in the case where there are no more radio resources available or if the radio resources necessary in order to satisfy the quality of service required by the requested service are insufficient.

11. Radio access network controller (RNC) according to one of Claims 9 and 10, **characterized in that** the means for pre-empting resources are implemented on receipt of at least one request for additional resources in order to respond to a change in the traffic on the said network, in the case where there are no more radio resources available or if the radio resources necessary in order to satisfy the quality of service required by the requested service are insufficient.

12. Radio access network controller (RNC) according to one of Claims 9 to 11, **characterized in that** it comprises, in the case where at least two radio access support services already active within the network are the subject, respectively, of a request for additional resources and where the resources necessary in order to satisfy the said requests are available, prioritization means for the allocation of resources capable of determining, as a function of the priority level associated with each of the support services, to which of the said support services the additional resources will be assigned by priority.

13. Radio access network controller (RNC) according to one of Claims 9 to 12, **characterized in that** it comprises, in the case where at least two radio access support services already active within the network do not make optimal use of the resources that have been allocated to them, means for reducing the resources allocated to these support services, in an order defined by the priority level associated with each of the said support services.

## Patentansprüche

1. Verfahren zur Verwaltung von Funkressourcen in einem ein Kernnetz (CN) und ein Funkzugangsnetz (UTRAN) enthaltenden Mobilkommunikationsnetz vom Typ UMTS, um mehrere Dienstanforderungen zu unterstützen, die von Benutzergeräten an das Kernnetz gesendet werden, wobei jeder Dienst durch Parameter des Kernnetzes spezifiziert wird, die eine für den angeforderten Dienst erforderliche Dienstqualität beschreiben, wobei das Verfahren für jede Dienstanforderung einen Schritt des Abgleichs der Dienstqualitätsparameter des Kernnetzes mit Dienstqualitätsparametern des Funkzugangsnetzes, RAB-Parameter genannt, und einen Schritt des Sendens einer die RAB-Parameter enthaltenden Funkzugang-Unterstützungsdienstanforderung vom Kernnetz an das Funkzugangsnetz enthält, **dadurch gekennzeichnet, dass,** wenn eine Prioritätsebene für einen Funkzugang-Unterstützungsdienst durch einen Sub-Parameter "priority level" des RAB-Parameters "Allocation Retention Priority" definiert ist, der Abgleichschritt darin besteht, einen Wert des Sub-Parameters "priority level" ausgehend von einem Wert des Dienstqualitätsparameters "Allocation Retention Priority" des Kernnetzes und von einem Wert mindestens eines mit dem Diensttyp verbundenen Dienstqualitätsparameters zu bestimmen.

2. Verfahren nach Anspruch 1, **dadurch gekennzeichnet, dass** der mindestens eine mit dem Diensttyp verbundene Dienstqualitätsparameter den Parameter "Traffic Class" enthält.

3. Verfahren nach Anspruch 2, **dadurch gekennzeichnet, dass** der mindestens eine mit dem Diensttyp verbundene Dienstqualitätsparameter außerdem den Parameter "Traffic handling priority" enthält, der es ermöglicht, Dienste vom interaktiven Typ gegeneinander zu priorisieren.

4. Verfahren nach einem der vorhergehenden Ansprüche, **dadurch gekennzeichnet, dass** es einen Schritt der Bevorrechtigung der Funkressourcen, die auf der Ebene des Funkzugangsnetzes (UTRAN) den Funkzugang-Unterstützungsdiensten zugeteilt sind, gemäß ihrer Prioritätsebene enthält, wobei der Schritt der Bevorrechtigung von Ressourcen bei Empfang mindestens einer neuen Funkzugang-Unterstützungsanforderung durch das Zugangsnetzwerk in dem Fall, in dem es keine verfügbaren Funkressourcen mehr gibt, oder wenn die zur Erfüllung der für den angeforderten Dienst erforderlichen Dienstqualität notwendigen Funkressourcen unzureichend sind, durchgeführt wird.

5. Verfahren nach einem der vorhergehenden Ansprüche, **dadurch gekennzeichnet, dass** es einen Schritt der Bevorrechtigung der Funkressourcen, die auf der Ebene des Funkzugangsnetzes (UTRAN) den Funkzugang-Unterstützungsdiensten zugeteilt sind, gemäß ihrer Prioritätsebene enthält, wobei der Schritt der Bevorrechtigung von Ressourcen bei Empfang mindestens einer Anforderung zusätzlicher Ressourcen, um auf eine Entwicklung des Verkehrs im Netz zu reagieren, in dem Fall, in dem es keine verfügbaren Funkressourcen mehr gibt, oder wenn die zur Erfüllung der für den angeforderten Dienst erforderlichen Dienstqualität notwendigen Funkressourcen unzureichend sind, durchgeführt wird.

6. Verfahren nach einem der vorhergehenden Ansprüche, **dadurch gekennzeichnet, dass** in dem Fall, in dem mindestens zwei bereits innerhalb des Netzes aktive Funkzugang-Unterstützungsdienste jeweils Gegenstand einer Anforderung zusätzlicher Ressourcen sind, und in dem die zur Erfüllung der Anforderungen notwendigen Ressourcen zur Verfügung stehen, das Verfahren einen Schritt der Priorisierung für die Zuteilung von Ressourcen enthält, der dazu bestimmt ist, in Abhängigkeit von der jedem der Unterstützungsdienste zugeordneten Prioritätsebene zu bestimmen, welchem der Unterstützungsdienste die zusätzlichen Ressourcen prioritär zugewiesen werden.

7. Verfahren nach einem der vorhergehenden Ansprüche, **dadurch gekennzeichnet, dass** in dem Fall, in dem mindestens zwei bereits innerhalb des Netzes aktive Funkzugang-Unterstützungsdienste die ihm zugeteilten Ressourcen nicht optimal nutzen, der Priorisierungsschritt dazu bestimmt ist, die diesen Unterstützungsdiensten zugeteilten Ressourcen in einer durch die jedem der Unterstützungsdienste zugeordnete Prioritätsebene definierten Reihenfolge zu verringern.

8. Kernnetz-Dienstknoten (SGSN, MSC) eines ein Kernnetz (CN) und ein Funkzugangsnetz (UTRAN) enthaltenden Mobilkommunikationsnetzes vom Typ UMTS, der mehrere Dienstanforderungen empfangen kann, die von Benutzergeräten an das Kernnetz gesendet werden, wobei jeder Dienst durch Parameter des Kernnetzes spezifiziert wird, die eine für den angeforderten Dienst erforderliche Dienstqualität beschreiben, wobei der Dienstknoten Einrichtungen zum Abgleich der Dienstqualitätsparameter des Kernnetzes mit Dienstqualitätsparametern des Funkzugangsnetzes, RAB-Parameter genannt, und Einrichtungen zum Senden einer Funkzugang-Unterstützungsdienstanforderung an das Zugangsnetz für jede die RAB-Parameter enthaltende Dienstanforderung enthält, **dadurch gekennzeichnet, dass,** wenn eine Prioritätsebene für einen Unterstützungsdienst durch einen Sub-Parameter "priority level" des RAB-Parameters "Allocation Retention Priority" definiert ist, die Abgleicheinrichtungen einen Wert des Sub-Parameters "priority level" ausgehend von einem Wert des Dienstqualitätsparameters "Allocation Retention Priority" des Kernnetzes und von einem Wert mindestens eines mit dem Diensttyp verbundenen Dienstqualitätsparameters bestimmen können.

9. Funknetzsteuerung (RNC) eines ein Kernnetz (CN) und ein Funkzugangsnetz (UTRAN) enthaltenden Mobilkommunikationsnetzes vom Typ UMTS, die mehrere Funkzugang-Unterstützungsdienstanforderungen empfangen kann, die vom Kernnetz als Antwort auf mehrere von Benutzergeräten an das Kernnetz gesendete Dienstanforderungen gesendet werden, wobei jede Funkzugang-Unterstützungsdienstanforderung RAB-Parameter enthält, die von einem Abgleich mit die für jede Dienstanforderung erforderliche Dienstqualität beschreibenden Dienstqualitätsparametern des Kernnetzes stammen, wobei die Steuerung Bevorrechtigungseinrichtungen von den Funkunterstützungsdiensten zugeteilten Funkressourcen in Abhängigkeit von einer jedem der Unterstützungsdienste zugeordneten Prioritätsebene enthält, **dadurch gekennzeichnet, dass** die Prioritätsebene eines Unterstützungsdiensts durch einen Sub-Parameter "priority level" des RAB-Parameters "Allocation Retention Priority" definiert wird, dessen Wert ausgehend von einem Wert des Dienstqualitätsparameters "Allocation Retention Priority" des Kernnetzes und von einem Wert mindestens eines mit dem Diensttyp verbundenen Dienstqualitätsparameters bestimmt wird.

10. Funknetzsteuerung (RNC) nach Anspruch 9, **dadurch gekennzeichnet, dass** die Ressourcen-Bevorrechtigungseinrichtungen bei Empfang mindestens einer neuen Funkzugang-Unterstützungsanforderung in dem Fall, in dem es keine verfügbaren Funkressourcen mehr gibt, oder wenn die zur Erfüllung der für den angeforderten Dienst erforderlichen Dienstqualität notwendigen Funkressourcen unzureichend sind, angewendet werden.

11. Funknetzsteuerung (RNC) nach einem der Ansprüche 9 und 10, **dadurch gekennzeichnet, dass** die Ressourcen-Bevorrechtigungseinrichtungen bei Empfang mindestens einer Anforderung zusätzlicher Ressourcen, um einer Entwicklung des Verkehrs im Netzwerk zu entsprechen, in dem Fall, in dem es keine verfügbaren Funkressourcen mehr gibt, oder wenn die zur Erfüllung der für den angeforderten Dienst erforderlichen Dienstqualität notwendigen Funkressourcen unzureichend sind, angewendet werden.

12. Funknetzsteuerung (RNC) nach einem der Ansprüche 9 bis 11, **dadurch gekennzeichnet, dass** sie in dem Fall, in dem mindestens zwei bereits im Netzwerk aktive Funkzugang-Unterstützungsdienste jeweils Gegenstand einer Anforderung zusätzlicher Ressourcen sind, und in dem die zur Erfüllung der Anforderungen notwendigen Ressourcen zur Verfügung stehen, Priorisierungseinrichtungen für die Zuteilung von Ressourcen enthält, die in Abhängigkeit von der jedem der Unterstützungsdienste zugeordneten Prioritätsebene bestimmen können, welchem der Unterstützungsdienste die zusätzlichen Ressourcen prioritär zugewiesen werden.

13. Funknetzsteuerung (RNC) nach einem der Ansprüche 9 bis 12, **dadurch gekennzeichnet, dass** sie in dem Fall, in dem mindestens zwei bereits im Netzwerk aktive Funkzugang-Unterstützungsdienste die ihnen zugeteilten Ressourcen nicht optimal nutzen, Einrichtungen zur Verringerung der diesen Unterstützungsdiensten zugeteilten Ressourcen in einer durch die jedem der Unterstützungsdienste zugeordnete Prioritätsebene definierten Reihenfolge enthält.
